(19) Europäisches Patentamt
European Patent Office
Office européen des brevets

(11) EP 2 913 240 A2

(12) EUROPÄISCHE PATENTANMELDUNG

(43) Veröffentlichungstag:
02.09.2015 Patentblatt 2015/36

(51) Int Cl.:
B60W 30/18 (2012.01)    B60W 10/20 (2006.01)

(21) Anmeldenummer: 14004204.5

(22) Anmeldetag: 12.12.2014

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 27.02.2014 DE 102014002856

(71) Anmelder: AUDI AG
85045 Ingolstadt (DE)

(72) Erfinder:
• Vogt, Hermann
85072 Eichstätt (DE)
• Sabelström, Erik
80992 München (DE)

(74) Vertreter: Thielmann, Frank
AUDI AG
Patentabteilung
85045 Ingolstadt (DE)

(54) **Verfahren zur Steuerung einer Fahrt eines Kraftfahrzeugs und Kraftfahrzeug**

(57)    Verfahren zur Steuerung einer Fahrt, insbesondere einer Rückwärtsfahrt, eines Kraftfahrzeugs, das durch eine Anhängerkupplung mit einem Anhänger gekoppelt ist, umfassend die Schritte:
- Erfassen eines Lenkwinkels wenigstens eines Rades des Kraftfahrzeugs,
- Berechnen einer maximalen Schubwinkelgeschwindigkeit, die eine zeitlichen Änderung des Schubwinkels beschreibt, in Abhängigkeit des Lenkwinkels, wobei der Schubwinkel den Winkel zwischen einer momentanen Bewegungsrichtung der Anhängerkupplung und einer Längsachse des Kraftfahrzeugs beschreibt,
- Erfassen einer Knickwinkelgeschwindigkeit, die die zeitliche Änderung eines Knickwinkels zwischen einer Längsachse des Anhängers und der Längsachse des Kraftfahrzeugs beschreibt, durch eine Knickwinkelerfassungseinrichtung,
- automatisches Reduzieren der Fahrzeuggeschwindigkeit, falls die Knickwinkelgeschwindigkeit größer ist als die maximale Schubwinkelgeschwindigkeit.

FIG. 2

EP 2 913 240 A2

**Beschreibung**

Die Erfindung betrifft ein Verfahren zur Steuerung einer Fahrt, insbesondere einer Rückwärtsfahrt, eines Kraftfahrzeugs, das durch eine Anhängerkupplung mit einem Anhänger gekoppelt ist.

Rückwärtsfahrten mit einem Anhänger, insbesondere einem nicht gelenkten Anhänger, sind insbesondere für Fahrer, die nicht regelmäßig einen Anhänger nutzen, sehr anspruchsvoll. Insbesondere kann, wenn der Knickwinkel zwischen Kraftfahrzeug und Anhänger einen gewissen Wert übersteigt, der Knickwinkel nicht mehr ohne eine Vorwärtsbewegung des Kraftfahrzeugs reduziert werden. Es sind daher zahlreiche Verfahren bekannt, um einen Fahrer beim Rückwärtsrangieren mit einem Anhänger zu unterstützen. Einige dieser Verfahren stellen dem Fahrer nur zusätzliche Informationen zur Verfügung, in anderen Verfahren wird durch ein aktives Lenken des Kraftfahrzeugs durch ein Fahrerassistenzsystem ein vorgegebener Knickwinkel zwischen dem Kraftfahrzeug und dem Anhänger eingestellt. Dabei erfolgt die Geschwindigkeitsvorgabe für das Rückwärtsfahren durch den Fahrer.

Insbesondere bei einer Einstellung des Lenkwinkels durch Aktoren eines Fahrerassistenzsystems, jedoch auch bei einer Steuerung durch den Fahrer selbst, ist die Geschwindigkeit, mit der ein Lenkwinkel angepasst werden kann, begrenzt. Dies führt bei höheren Fahrzeuggeschwindigkeiten dazu, dass in einigen Fällen ein gewünschter Knickwinkel nicht oder nicht direkt erreicht werden kann. Stattdessen wird ein anderer, meist unerwünschter Knickwinkel eingenommen, der wieder ausgeglichen werden muss. Im ungünstigsten Fall erreicht der Anhänger einen Knickwinkel, der im Rahmen einer Rückwärtsfahrt nicht wieder verkleinert werden kann.

Der Erfindung liegt damit die Aufgabe zugrunde, ein demgegenüber verbessertes Verfahren zur Steuerung einer Rückwärtsfahrt eines Kraftfahrzeugs mit einem Anhänger anzugeben.

Die Aufgabe wird erfindungsgemäß durch ein Verfahren der eingangs genannten Art gelöst, das die folgenden Schritte umfasst:

- Erfassen eines Lenkwinkels wenigstens eines Rades des Kraftfahrzeugs,
- Berechnen einer maximalen Schubwinkelgeschwindigkeit, die eine zeitlichen Änderung des Schubwinkels beschreibt, in Abhängigkeit des Lenkwinkels, wobei der Schubwinkel den Winkel zwischen einer momentanen Bewegungsrichtung der Anhängerkupplung und einer Längsachse des Kraftfahrzeugs beschreibt,
- Erfassen einer Knickwinkelgeschwindigkeit, die die zeitliche Änderung eines Knickwinkels zwischen einer Längsachse des Anhängers und der Längsachse des Kraftfahrzeugs beschreibt, durch eine Knickwinkelerfassungseinrichtung,
- automatisches Reduzieren der Fahrzeuggeschwindigkeit, falls die Knickwinkelgeschwindigkeit größer ist als die maximale Schubwinkelgeschwindigkeit.

Erfindungsgemäß wird also vorgeschlagen, durch eine Reduzierung der Fahrzeuggeschwindigkeit bei Bedarf sicherzustellen, dass die Knickwinkelgeschwindigkeit die maximale Schubwinkelgeschwindigkeit zumindest nicht dauerhaft übersteigt. Die Schubwinkelgeschwindigkeit ist dabei insbesondere von der maximalen Lenkwinkelgeschwindigkeit abhängig. Durch die erfindungsgemäße Bedingung zur automatischen Reduzierung der Fahrzeuggeschwindigkeit wird sichergestellt, dass bei einem Lenken mit der maximalen Lenkwinkelgeschwindigkeit der Knickwinkel nicht weiter vergrößert wird. Durch das erfindungsgemäße Verfahren bleibt der Knickwinkel also stets beherrschabar. Insbesondere müssen im erfindungsgemäßen Verfahren weder die Geometriedaten des Anhängers bekannt sein, noch müssen Umgebungsdaten, wie beispielsweise Steigungen oder Gefälle im Rangierbereich berücksichtigt werden.

Die Knickwinkelgeschwindigkeit kann dabei direkt erfasst werden, es ist jedoch auch möglich, Sensoren zu nutzen, die einen absoluten Knickwinkel messen oder die eine relative Knickwinkeländerung erfassen, wie beispielsweise Drehimpulsgeber basierte Sensoren. Dabei kann die Knickwinkelgeschwindigkeit durch Zeitableitung des erfassten Knickwinkels oder durch Erfassen der relativen Knickwinkeländerung über ein vorgegebenes Zeitintervall ermittelt werden. Alternativ ist es selbstverständlich möglich, den Knickwinkel durch eine Auswertung von Daten weiterer Fahrzeugsysteme, beispielsweise von Videokameras oder Abstandssensoren, zu bestimmen.

Ein Lenkwinkel kann durch bekannte Lenkwinkelsensoren im Kraftfahrzeug ermittelt werden. Alternativ kann auch direkt eine Lenkwinkelvorgabe eines Fahrerassistenzsystems als Lenkwinkel ausgewertet werden. Dabei wird insbesondere der Lenkwinkel der Räder der Vorderachse erfasst. Bei Kraftfahrzeugen mit Hinterradlenkung kann zusätzlich der Lenkwinkel der Hinterräder erfasst werden.

Das Erfassen des Lenkwinkels, das Erfassen der Knickwinkelgeschwindigkeit, die Berechnung der maximalen Schubwinkelgeschwindigkeit sowie eine optionale Erfassung einer Fahrzeuggeschwindigkeit sind dabei in nahezu beliebiger Reihenfolge ausführbar, wobei die Berechnung der maximalen Schubwinkelgeschwindigkeit nach Messung des Lenkwinkels erfolgen sollte.

Die erfassten Daten werden insbesondere an eine Steuereinrichtung bereitgestellt, worauf diese die maximale Schubwinkelgeschwindigkeit berechnet und bei zu großer Knickwinkelgeschwindigkeit weitere Fahrzeugsysteme zur Reduzierung der Fahrzeuggeschwindigkeit ansteuert. Dabei ist eine direkte oder indirekte Steuerung des Antriebs, der Bremsen und/oder des Getriebes des Kraftfahrzeugs möglich. Vorzugsweise erfolgt jedoch eine Vorgabe einer neuen Sollgeschwindigkeit oder einer Geschwindigkeitsänderung für ein Fahrerassistenzsystem, einen Regelkreis oder ähnliches.

Die Berechnungen der Schubwinkelgeschwindigkeit lässt sich dabei direkt aus geometrischen Betrachtungen des Problems ableiten. Dabei kann die Anhängerkupplung als punktförmiger Drehpunkt zwischen der Anhängerdeichsel beziehungsweise der Anhängerlängsachse und dem Kraftfahrzeug angenommen werden. Zudem kann das Kraftfahrzeug als starrer Körper angenommen werden und durch Betrachtung des Momentanpols des Kraftfahrzeugs, der sich aus dem Lenkwinkel der Vorderräder des Kraftfahrzeugs, der Geometrie des Kraftfahrzeugs sowie optional dem Lenkwinkel der Hinterräder des Kraftfahrzeugs bestimmen lässt, die Richtung der Bewegung der Anhängerkupplung berechnet werden. Der Schubkraftvektor entspricht dabei dem Geschwindigkeitsvektor der Anhängerkupplung und die Schubwinkelgeschwindigkeit der Zeitableitung der Richtung des Schubkraftvektors.

Aus der erläuterten Betrachtung ergibt sich für ein übliches Kraftfahrzeug mit zwei Achsen und einer Vorderradlenkung eine Abhängigkeit der Schubwinkelgeschwindigkeit von dem Lenkwinkel, der Lenkwinkelgeschwindigkeit, dem Achsabstand zwischen den Achsen des Kraftfahrzeugs, und dem Abstand der Anhängerkupplung von der Hinterachse des Kraftfahrzeugs. Die genannten Abstände hängen dabei ausschließlich von der Fahrzeuggeometrie ab und sind daher bekannt. Sie können beispielsweise in einer Steuereinrichtung des Kraftfahrzeugs gespeichert sein. Der Lenkwinkel wird im erfindungsgemäßen Verfahren vor Berechnung der maximalen Schubwinkelgeschwindigkeit gemessen. Damit verbleibt ausschließlich eine Abhängigkeit von der Lenkwinkelgeschwindigkeit.

Es ist daher vorteilhaft, wenn die maximale Schubwinkelgeschwindigkeit in Abhängigkeit einer vorgegebenen maximalen Lenkwinkelgeschwindigkeit, die eine zeitliche Änderung des Lenkwinkels beschreibt, berechnet wird. Dabei kann die maximale Lenkwinkelgeschwindigkeit insbesondere vor Beginn des Verfahrens vorgegeben werden, wobei insbesondere eine separate Vorgabe einer maximalen Lenkwinkelgeschwindigkeit für die Anpassung des Lenkwinkels einer Vorderachse und einer Hinterachse möglich ist. Die maximale Lenkwinkelgeschwindigkeit kann aufgrund der Konstruktion des Kraftfahrzeugs oder der Ausbildung eines Fahrerassistenzsystems fest vorgegeben sein. Alternativ kann die maximale Lenkwinkelgeschwindigkeit auch dynamisch durch ein Fahrerassistenzsystem vorgegeben werden. Bei einer durch einen Fahrer selbst gesteuerten Rückwärtsfahrt kann es vorteilhaft sein, die maximale Lenkwinkelgeschwindigkeit fahrerabhängig anzupassen. Dazu können Eingabemittel im Kraftfahrzeug vorgesehen sein. Es ist jedoch auch möglich, eine maximale Lenkwinkelgeschwindigkeit aus während des Fahrbetriebs erfassten Fahrdaten zu ermitteln.

Es ist insbesondere möglich, dass beim Reduzieren der Fahrzeuggeschwindigkeit die Fahrzeuggeschwindigkeit auf einen in Abhängigkeit des erfassten Lenkwinkels berechneten Sollgeschwindigkeitswert begrenzt wird. Damit ist der Sollgeschwindigkeitswert insbesondere auch abhängig von der berechneten maximalen Schubwinkelgeschwindigkeit, da diese ebenfalls vom erfassten Lenkwinkel abhängt.

Alternativ oder ergänzend zur direkten Reduzierung der Fahrzeuggeschwindigkeit auf den Sollgeschwindigkeitswert kann zur Anpassung der Fahrzeuggeschwindigkeit auch ein Regelkreis genutzt werden. Dabei kann der Regelkreis, insbesondere bei Steuerung der Rückwärtsfahrt durch ein Fahrerassistenzsystem, stets genutzt werden oder nur, wenn die momentane Knickwinkelgeschwindigkeit größer ist als die maximale Schubwinkelgeschwindigkeit. Dabei kann insbesondere die Knickwinkelgeschwindigkeit die Regelgröße sein, die Fahrzeuggeschwindigkeit die Stellgröße und die maximale Schubwinkelgeschwindigkeit die Führungsgröße. Dabei ist es insbesondere möglich, statt der maximalen Schubwinkelgeschwindigkeit einen kleineren Wert als Führungsgröße zu wählen, um eine größere Flexibilität bei der Einstellung des Knickwinkels zu erreichen.

Der Sollgeschwindigkeitswert kann insbesondere in Abhängigkeit eines Quotienten der maximalen Schubwinkelgeschwindigkeit und der Knickwinkelgeschwindigkeit berechnet werden. Dabei wird ausgenutzt, dass die Knickwinkelgeschwindigkeit proportional zur Fahrzeuggeschwindigkeit ist. Der Sollgeschwindigkeitswert kann insbesondere kleiner oder gleich einem Produkt aus der ermittelten Fahrzeuggeschwindigkeit und dem Quotienten aus der maximalen Schubwinkelgeschwindigkeit und der Knickwinkelgeschwindigkeit sein.

Im erfindungsgemäßen Verfahren kann zudem, falls die Knickwinkelgeschwindigkeit größer ist als die maximale Schubwinkelgeschwindigkeit und eine momentane Fahrzeuggeschwindigkeit kleiner ist als eine vorgegebene Minimalgeschwindigkeit, das Kraftfahrzeug in den Stillstand gebremst werden und/oder ein Warnsignal an den Fahrer ausgegeben werden. Dies ist insbesondere vorteilhaft, wenn die Reduzierung der Fahrzeuggeschwindigkeit in einer Weise geschieht, die es nur ermöglicht, die Fahrzeuggeschwindigkeit bis auf die vorgegebene Minimalgeschwindigkeit zu senken. In diesem Fall soll verhindert werden, dass durch ein Einknicken des Anhängers Schäden am Anhänger oder am Heck des Kraftfahrzeugs entstehen. Dies ist zum einen dadurch möglich, dass der Fahrer auf ein notwendiges Eingreifen durch ein Warnsignal bzw. eine Warnmeldung hingewiesen wird, andererseits dadurch, dass das Kraftfahrzeug durch ein Fahrzeugsystem in den Stand gebremst wird. Ein entsprechendes Bremsen in den Stand kann insbesondere auch dadurch erreicht werden, dass, bei einer oben beschriebenen Berechnung eines Sollgeschwindigkeitswerts in Abhängigkeit des erfassten Lenkwinkels, Sollgeschwindigkeitswerte, die kleiner sind als die vorgegebene Minimalgeschwindigkeit auf Null gesetzt werden.

Im erfindungsgemäßen Verfahren kann vor dem Erfassen des Lenkwinkels eine automatische Lenkwinkelanpassung durch ein Fahrerassistenzsystem durchgeführt werden, wobei der Lenkwinkel in Abhängigkeit eines benutzerseitig vorgegebenen Sollknickwinkels angepasst wird. Derartige Steuerungen beziehungsweise Regelungen des Knickwinkels sind prinzipiell aus dem Stand der Technik bekannt. Durch die Kombination einer automatischen Lenkwinkelanpassung mit der erfindungsgemäßen Reduzierung der Fahrzeuggeschwindigkeit wird erreicht, dass ein Fahrerassistenzsystem zur automatischen Knickwinkelführung, auch ohne Kenntnis von Anhängerdaten, wie beispielsweise der Deichsellänge, und ohne Kenntnis von Steigungen und/oder Gefällen im Umfeld, den Knickwinkel stets stabil steuern beziehungsweise regeln kann.

Ergänzend kann im erfindungsgemäßen Verfahren der Lenkwinkel wenigstens eines Hinterrades eines Kraftfahrzeugs bestimmt werden, wonach die maximale Schubwinkelgeschwindigkeit in Abhängigkeit dieses Lenkwinkels berechnet wird. Das erfindungsgemäße Verfahren ist also sowohl für Fahrzeuge mit reiner Vorderradlenkung als auch für Fahrzeuge mit Vorder- und Hinterradlenkung nutzbar.

Daneben betrifft die Erfindung ein Kraftfahrzeug, das zur Durchführung des erfindungsgemäßen Verfahrens ausgebildet ist, wobei es eine Knickwinkelerfassungseinrichtung zur Erfassung der Knickwinkelgeschwindigkeit, eine Lenkwinkelerfassungseinrichtung zur Erfassung eines Lenkwinkels und/oder ein Fahrerassistenzsystem zur Vorgabe des Lenkwinkels sowie eine Steuereinrichtung zur Berechnung der maximalen Schubwinkelgeschwindigkeit und zur Steuerung des Kraftfahrzeugs zur Reduzierung der Fahrzeuggeschwindigkeit umfasst. Die Knickwinkelerfassungseinrichtung kann dabei wie eingangs erwähnt die Knickwinkelgeschwindigkeit direkt messen, sie aber auch aus dem Knickwinkel selbst oder einem relativen Knickwinkel bestimmen. Alternativ kann die Knickwinkelerfassungseinrichtung auch eine Verarbeitungseinrichtung sein, die Sensordaten beispielsweise einer Kamera, eines Ultraschallsensors, eines Radarsensors oder eines Lidarsensors verarbeitet. Die Steuereinrichtung, die Verarbeitungseinrichtung, die Knickwinkelerfassungseinrichtung und/oder das Fahrerassistenzsystem können dabei durch beliebige kraftfahrzeugseitige Einrichtungen ausgebildet sein. So ist es möglich, dass für die Rechen- und Verarbeitungsfunktionen aller dieser Systeme eine gemeinsame Recheneinrichtung genutzt wird. Es ist jedoch auch die Nutzung separater Recheneinrichtungen möglich.

Das Kraftfahrzeug kann dabei insbesondere ein Fahrerassistenzsystem zur Steuerung eines Knickwinkels zwischen dem Kraftfahrzeug und dem Anhänger mit einem zugeordneten Bedienelement zur Knickwinkelvorgabe durch einen Benutzer umfassen. Dabei kann insbesondere eine Steuerung des Knickwinkels bei der Rückwärtsfahrt vorgesehen sein.

Ein Lenken des Kraftfahrzeugs kann durch verschiedene Lenksysteme erfolgen, wobei beispielsweise eine reine Vorderradlenkung, eine Hinterradlenkung oder eine Kombination von beiden möglich ist.

Das erfindungsgemäße Kraftfahrzeug lässt sich zudem mit den mit Bezug auf das erfindungsgemäße Verfahren beschriebenen Merkmalen und Einzelheiten fortbilden.

Weitere Vorteile und Einzelheiten werden mit Bezug auf die folgenden Ausführungsbeispiele sowie die zugehörigen Zeichnungen beschrieben. Dabei zeigen:

Fig. 1     schematisch ein Ablaufdiagramm eines Ausführungsbeispiels des erfindungsgemäßen Verfahrens,

Fig. 2     schematisch eine Darstellung der Fahrzeug- und Anhängergeometrie in einem Einspurmodell,

Fig. 3     schematisch ein Ablaufdiagramm eines weiteren Ausführungsbeispiels des erfindungsgemäßen Verfahrens, und

Fig. 4     ein Ausführungsbeispiel eines erfindungsgemäßen Kraftfahrzeugs.

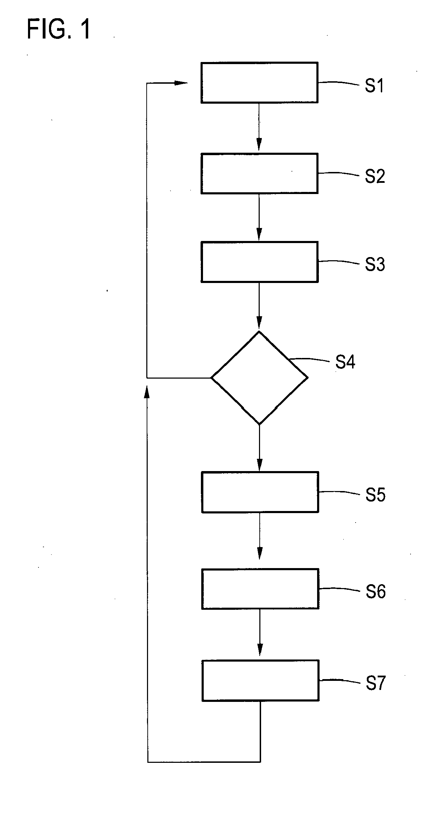

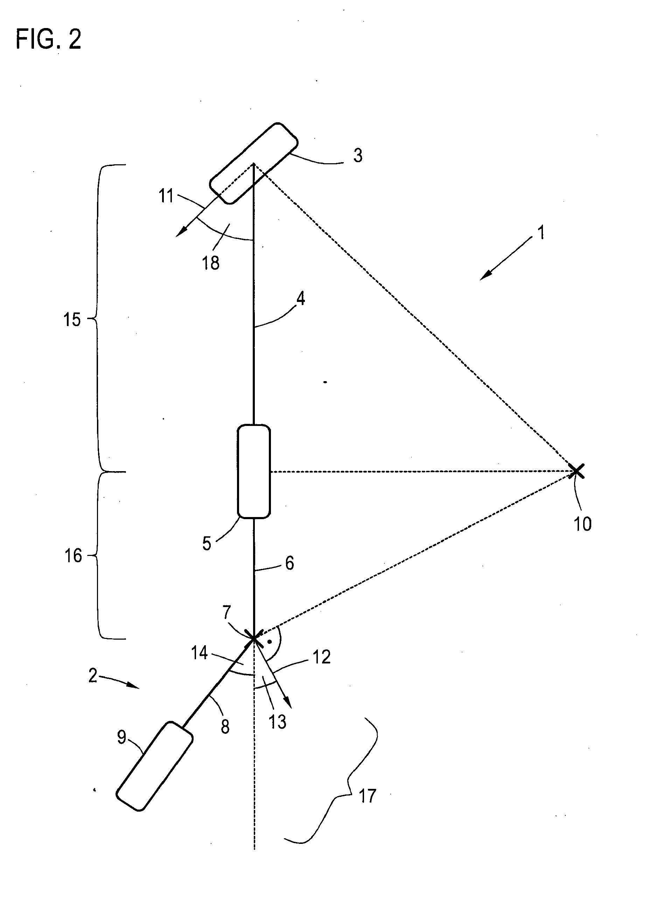

Fig. 1 zeigt schematisch ein Ablaufdiagramm eines Ausführungsbeispiels eines Verfahrens zur Steuerung einer Rückwärtsfahrt eines Kraftfahrzeugs mit einem an das Kraftfahrzeug angekoppelten Anhänger. Im Rahmen des Verfahrens wird auf die in Fig. 2 gezeigte schematische Darstellung eines mit einem Anhänger rückwärtsfahrenden Kraftfahrzeug im Einspurmodell Bezug genommen. Dabei sind schematisch ein Kraftfahrzeug 1 und ein Anhänger 2 dargestellt. Die Abbildung erfolgt im Einspurmodell, das heißt, dass nur ein Vorder- und ein Hinterrad des Kraftfahrzeugs sowie ein Rad des Anhängers berücksichtigt werden. Das Kraftfahrzeug 1 ist dabei durch das eingelenkte Vorderrad 3, das Hinterrad 5, den das Vorderrad 3 und das Hinterrad 5 verbindenden Abschnitt 4 der Fahrzeuglängsachse, die Anhängerkupplung 7 sowie den das Hinterrad 5 und die Anhängerkupplung 7 verbindenden Abschnitt 6 der Fahrzeuglängsachse dargestellt. Das Kraftfahrzeug 1 bewegt sich rückwärts und schiebt dabei einen Anhänger 2, der durch ein Rad 9 sowie die Anhängedeichsel 8 beziehungsweise die Längsachse des Anhängers 2 dargestellt ist. Zu Beginn des Verfahrens bewegt sich das Kraftfahrzeug 1 rückwärts und schiebt dabei den Anhänger 2. Die Anhängerdeichsel 8 schließt mit der Fahrzeuglängsachse den Knickwinkel 14 ein. Das Vorderrad 3 ist mit dem Lenkwinkel 18 eingelenkt, der zu Beginn des Verfahrens in Schritt S1 erfasst wird.

In Schritt S2 wird für das Kraftfahrzeug 1 eine maximale Schubwinkelgeschwindigkeit berechnet. Der Schubwinkel 13 ist der Winkel zwischen dem Geschwindigkeitsvektor 12, also der Bewegungsrichtung, der Anhängerkupplung 7 und der Längsachse des Kraftfahrzeugs. Die Richtung des Geschwindigkeitsvektors 12 der Anhängerkupplung 7 kann durch geometrische Betrachtungen ermittelt werden. Bei einer Rückwärtsbewegung des Kraftfahrzeugs 1 bewegt sich das Vorderrad 3 in Richtung des Geschwindigkeitsvektors 11 und das Hinterrad bewegt sich rückwärts in Richtung der Fahrzeuglängsachse. Da das Kraftfahrzeug ein im Wesentlichen starrer Köper ist, kann die Gesamtbewegung des Kraftfahrzeugs auf eine Rotation des Kraftfahrzeugs 1 um einen sogenannten Momentanpol 10 abgebildet werden. Dies bedeutet, dass sich jeder Punkt des Kraftfahrzeugs 1 bei einer Rückwärtsfahrt des Kraftfahrzeugs 1 senkrecht zu der Verbindungslinie zwischen dem jeweiligen Punkt und dem Momentanpol 10 bewegt. Damit ergibt sich ein Geschwindigkeitsvektor 12 für die Anhängerkupplung 7.

Der Schubwinkel 13 ist demnach abhängig vom Lenkwinkel 18, der Länge 15 des Abschnitts 4 zwischen Vorderrad 3 und Hinterrad 5 und der Länge 16 des Abschnitts 6 zwischen Hinterrad 9 und Anhängerkupplung 7. Die Längen 15, 16 sind dabei fest durch die Fahrzeuggeometrie vorgegeben und zeitlich nicht veränderlich. Die zeitliche Änderung des Schubwinkels 13, also die Schubwinkelgeschwindigkeit, hängt neben den genannten Faktoren zusätzlich von der Lenkwinkelgeschwindigkeit ab, mit der sich der Lenkwinkel 18 ändert. Im Ausführungsbeispiel ist die Schubwinkelgeschwindigkeit:

$$SWG = (I_{16} \cdot LWG \cdot (1 + \tan^2(LW)) : I_{15}) : (1 + (I_{16} \cdot \tan(LW) : I_{15}),$$

wobei SWG die Schubwinkelgeschwindigkeit, $I_{16}$ die Länge 16 des Abschnitts 6, $I_{15}$ die Länge 15 des Abschnitts 4, LW der Lenkwinkel und LWG die Lenkwinkelgeschwindigkeit ist.

Da die beiden Längen 15, 16 konstant sind, hängt die maximal mögliche Schubwinkelgeschwindigkeit ausschließlich vom momentanen Lenkwinkel 18 sowie einer maximalen Lenkwinkelgeschwindigkeit ab. Die maximale Lenkwinkelgeschwindigkeit kann dabei in einer Steuereinrichtung, die die Berechnung der maximalen Schubwinkelgeschwindigkeit durchführt, vorgegeben sein.

In Schritt S3 wird die Knickwinkelgeschwindigkeit, also die zeitliche Änderung des Knickwinkels 14 erfasst. Sensoren zur Erfassung einer derartigen Knickwinkeländerung sind im Stand der Technik bekannt. Dabei kann ein Drehimpulsgeber genutzt werden, dessen Impulse über einen vorgegebenen Zeitraum gezählt werden, um eine Knickwinkelgeschwindigkeit für den Zeitraum zu bestimmen, oder es kann die Zeitableitung eines direkt erfassten Knickwinkels 14 ermittelt werden. Ein Knickwinkel 14 kann zum Beispiel über einen entsprechenden Drehsensor oder durch Auswertung von Sensordaten weiterer Kraftfahrzeugsensoren wie Kameras oder Ultraschallsensoren ermittelt werden.

Nach Erfassung der Knickwinkelgeschwindigkeit in Schritt S3 und Berechnung der maximalen Schubwinkelgeschwindigkeit in Schritt S2 werden diese beiden Geschwindigkeiten in Schritt S4 verglichen. Ist die Knickwinkelgeschwindigkeit kleiner als die maximale Schubwinkelgeschwindigkeit, so ist weiterhin ein kontrolliertes Rangieren bei der momentanen Geschwindigkeit möglich und das Verfahren kann mit Schritt S1 fortgesetzt werden. Ist die Knickwinkelgeschwindigkeit größer als die maximale Schubwinkelgeschwindigkeit, so wird das Verfahren mit Schritt S5 fortgesetzt, um die Fahrzeuggeschwindigkeit zu reduzieren. Dabei wäre es in Schritt S4 möglich, statt der maximalen Schubwinkelgeschwindigkeit zum Vergleich einen Wert zu nutzen, der um einen vorgegebenen Betrag oder einen vorgegebenen Faktor kleiner ist als die maximale Schubwinkelgeschwindigkeit, um eine flexiblere Korrektur eines Knickwinkels 14 zu ermöglichen.

Wird in Schritt S4 festgestellt, dass die Knickwinkelgeschwindigkeit die maximale Schubwinkelgeschwindigkeit beziehungsweise den kleineren Wert überschreitet, wird in Schritt S5 die Kraftfahrzeuggeschwindigkeit erfasst. Die Kraftfahrzeuggeschwindigkeit wird in typischen Kraftfahrzeugen 1 ständig von Kraftfahrzeugsystemen erfasst, so dass ein Erfassen der Kraftfahrzeuggeschwindigkeit auf ein Auslesen einer bereits erfassten Kraftfahrzeuggeschwindigkeit beschränkt sein kann.

Darauf wird in Schritt S6 ein Sollgeschwindigkeitswert für das Kraftfahrzeug 1 bestimmt. Der Sollgeschwindigkeitswert wird derart bestimmt, dass er gleich oder kleiner einem Produkt der erfassten Fahrzeuggeschwindigkeit mit dem Quotienten der maximalen Schubwinkelgeschwindigkeit und der Knickwinkelgeschwindigkeit ist. Dabei wird ausgenutzt, dass die Knickwinkelgeschwindigkeit proportional zur Fahrzeuggeschwindigkeit ist. Die Knickwinkelgeschwindigkeit hängt zwar von einer Vielzahl weiterer Faktoren ab, insbesondere der Deichsellänge 17 des Anhängers 2, dem Knickwinkel 14 selbst sowie dem Schubwinkel 13, all diese Faktoren werden jedoch bereits mit der Knickwinkelgeschwindigkeit berücksichtigt. Soll in Schritt S6 eine Fahrzeuggeschwindigkeit bestimmt werden, die kleiner ist als die ermittelte maximale Fahrzeuggeschwindigkeit, so kann dies durch eine Skalierung der maximalen Fahrzeuggeschwindigkeit mit einem Faktor <1 oder durch Abziehen eines vorgegebenen Wertes erfolgen.

In Schritt S7 werden anschließend durch eine Steuereinrichtung des Kraftfahrzeugs 1 der Motor und die Bremsen des Kraftfahrzeugs 1 angesteuert, um die Kraftfahrzeuggeschwindigkeit auf die Sollgeschwindigkeit zu senken. Alternativ zu direkten Ansteuerung kann der Sollgeschwindigkeitswert auch an einen Regelkreis oder ein Fahrerassistenzsystem, das die Fahrzeuggeschwindigkeit einstellt, bereitgestellt werden.

Anschließend wird das Verfahren ab Schritt S1 wiederholt.

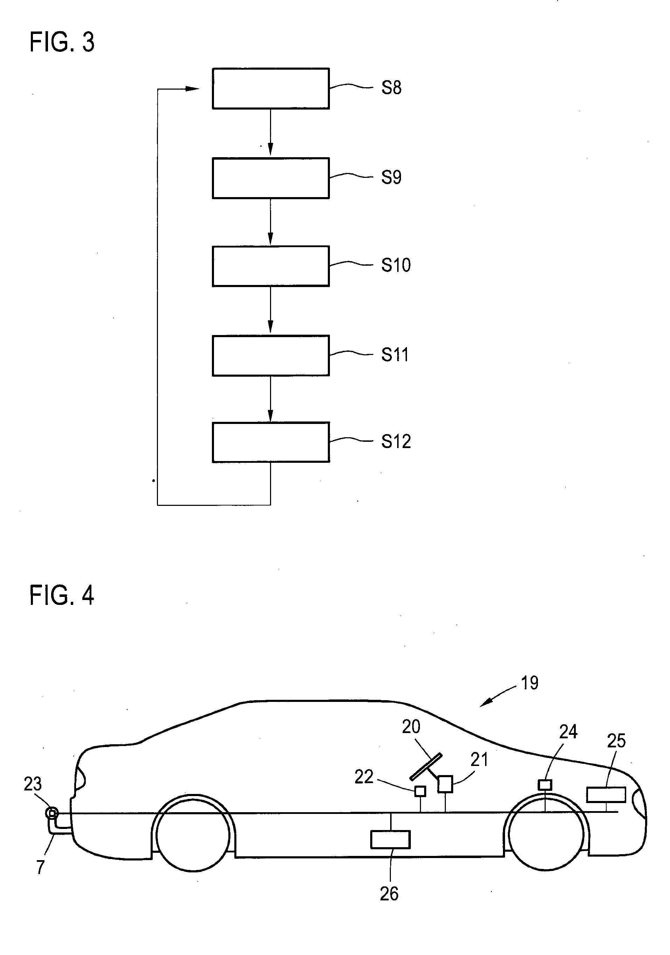

Fig. 3 zeigt schematisch ein Ablaufdiagramm eines weiteren Ausführungsbeispiels eines Verfahrens zur Steuerung einer Rückwärtsfahrt eines Kraftfahrzeugs 1. Dabei wird in Schritt S8 bereits vor oder während der Rückwärtsfahrt des Kraftfahrzeugs 1 mit einem Anhänger 2 durch einen Benutzer ein Sollknickwinkel vorgegeben. Hierfür kann im Kraftfahrzeug ein separates Bedienelement vorgesehen sein, es können jedoch auch menügeführte Bediensysteme oder ähnliches genutzt werden.

In Schritt S9 wird anschließend während der Rückwärtsfahrt der momentane Knickwinkel 14 erfasst. Dies erfolgt wie zu Schritt S3 in Fig. 1 beschrieben. Dabei werden zumindest zwei zeitlich aufeinander folgende Werte des Knickwinkels 14 erfasst und/oder ein vorangehender Knickwinkelwert wird gespeichert, um aus den zeitlich beabstandeten Knickwinkelwerten im Folgenden eine Knickwinkelgeschwindigkeit berechnen zu können.

In Schritt S10 erfolgt eine Steuerung beziehungsweise Regelung des Knickwinkels 14 durch das Fahrerassistenzsystem zur Knickwinkelsteuerung. Eine entsprechende Steuerung beziehungsweise Regelung erfolgt wie im Stand der Technik bekannt, wobei das Fahrerassistenzsystem zur Anpassung des Knickwinkels 14 einen Lenkwinkel 18 für das Kraftfahrzeug 1 vorgibt.

Darauf wird in Schritt S11 eine maximale Schubwinkelgeschwindigkeit berechnet, wie zu Schritt S2 in Fig. 1 beschrieben, wonach in Schritt S12 eine Regelung der Kraftfahrzeuggeschwindigkeit durchgeführt wird. Im gezeigten Verfahren ist diese Regelung bei der Rückwärtsfahrt mit einem Anhänger 2 stets aktiv, es ist jedoch selbstverständlich auch möglich, diese Regelung nur dann zu nutzen, wenn vorgegebene Bedingungen erfüllt sind, insbesondere dann, wenn die Knickwinkelgeschwindigkeit größer als die maximale Schubwinkelgeschwindigkeit ist. Dabei ist die Knickwinkelgeschwindigkeit die Regelgröße, die als Eingangsgröße eines Reglers genutzt wird. Die maximale Schubwinkelgeschwindigkeit beziehungsweise ein, wie zu Schritt S4 in Fig. 1 erläutert, gewählter kleinerer Wert ist die Führungsgröße. Die Abweichung der Knickwinkelgeschwindigkeit, also der zeitlichen Ableitung beziehungsweise der Differenz zwischen zeitlich aufeinander folgenden Werten des Knickwinkels 14, von der maximalen Schubwinkelgeschwindigkeit ist damit Fehlergröße des Regelkreises. Entsprechend wird durch die Regelung die Fahrzeuggeschwindigkeit genau so gesteuert, dass die Knickwinkelgeschwindigkeit gleich der maximalen Schubwinkelgeschwindigkeit beziehungsweise dem gewählten Wert, der kleiner als die maximale Schubwinkelgeschwindigkeit ist, ist. Die Regelung kann beispielsweise über einen proportional oder proportional-integral Regler erfolgen. Nach dem Regeleingriff wird das Verfahren wieder mit Schritt S8 fortgesetzt, wobei die Vorgabe eines neuen Sollknickwinkels offensichtlich optional ist.

Fig. 4 zeigt ein Ausführungsbeispiel eines Kraftfahrzeugs, das zur Durchführung eines Verfahrens zur Steuerung einer Rückwärtsfahrt eines Kraftfahrzeugs ausgebildet ist. Das Kraftfahrzeug 19 weist ein Lenkrad 20 auf, über das durch einen Benutzer der Lenkwinkel und damit bei einer Fahrt mit Anhänger auch der Schubwinkel einstellbar ist. Das Lenkrad 20 ist über eine nicht gezeigte Lenkachse mit einer Vorderradlenkung verbunden, wobei der Lenkwinkel des Lenkrads 20 zusätzlich durch den Lenkwinkelsensor 21 erfasst wird. Um eine Rückwärtsfahrt mit Anhänger zu erleichtern, weist das Kraftfahrzeug auch ein Fahrerassistenzsystem mit einem Eingabemittel 22 zur Vorgabe eines Knickwinkels zwischen Kraftfahrzeug 19 und Anhänger auf. Die Rechen- und Steueraufgaben des Fahrerassistenzsystems werden durch die Steuereinrichtung 26 erfüllt.

Ist ein Anhänger mit dem Kraftfahrzeug 19 gekoppelt, so kann eine Änderung des Knickwinkels durch den Knickwinkeländerungssensor 23 erfasst werden, der bei einer Änderung des Knickwinkels als Impulsgeber dient. Die Steuereinrichtung 26 wertet die Signale des Knickwinkeländerungssensors 23 derart aus, dass zum einen ein Knickwinkel für eine Steuerung des Knickwinkels bei der Rückwärtsfahrt durch das Fahrerassistenzsystem bereitgestellt wird und zum anderen eine Knickwinkelgeschwindigkeit für die vorangehend beschriebene Geschwindigkeitsanpassung ermittelt wird. Durch die Steuereinrichtung 26 wird zudem die Geschwindigkeit des Kraftfahrzeugs 19 über Drehzahlsensoren 24 an den Rädern erfasst. Die Steuereinrichtung 26 kann die zuvor beschriebenen Verfahren durchführen, wobei zur Geschwindigkeitsänderung der Motor 25 gesteuert wird. Zusätzlich oder alternativ wäre eine Steuerung von nicht gezeigten Bremsen möglich. Die gezeigten Komponenten des Kraftfahrzeugs kommunizieren über einen schematisch gezeigten Fahrzeugbus, beispielsweise einen CAN-Bus.

## Patentansprüche

1.  Verfahren zur Steuerung einer Fahrt, insbesondere einer Rückwärtsfahrt, eines Kraftfahrzeugs, das durch eine Anhängerkupplung mit einem Anhänger gekoppelt ist, umfassend die Schritte:

    - Erfassen eines Lenkwinkels wenigstens eines Rades des Kraftfahrzeugs,
    - Berechnen einer maximalen Schubwinkelgeschwindigkeit, die eine zeitlichen Änderung des Schubwinkels beschreibt, in Abhängigkeit des Lenkwinkels, wobei der Schubwinkel den Winkel zwischen einer momentanen Bewegungsrichtung der Anhängerkupplung und einer Längsachse des Kraftfahrzeugs beschreibt,

- Erfassen einer Knickwinkelgeschwindigkeit, die die zeitliche Änderung eines Knickwinkels zwischen einer Längsachse des Anhängers und der Längsachse des Kraftfahrzeugs beschreibt, durch eine Knickwinkelerfassungseinrichtung,

- automatisches Reduzieren der Fahrzeuggeschwindigkeit, falls die Knickwinkelgeschwindigkeit größer ist als die maximale Schubwinkelgeschwindigkeit.

**2.** Verfahren nach Anspruch 1,
**dadurch gekennzeichnet,**
**dass** die maximale Schubwinkelgeschwindigkeit in Abhängigkeit einer vorgegebenen maximalen Lenkwinkelgeschwindigkeit, die eine zeitliche Änderung des Lenkwinkels beschreibt, berechnet wird.

**3.** Verfahren nach Anspruch 1 oder 2,
**dadurch gekennzeichnet,**
**dass** beim Reduzieren der Fahrzeuggeschwindigkeit die Fahrzeuggeschwindigkeit auf einen in Abhängigkeit des erfassten Lenkwinkel berechneten Sollgeschwindigkeitswert begrenzt wird.

**4.** Verfahren nach Anspruch 3,
**dadurch gekennzeichnet, dass** der Sollgeschwindigkeitswert in Abhängigkeit eines Quotient der maximalen Schubwinkelgeschwindigkeit und der Knickwinkelgeschwindigkeiten berechnet wird.

**5.** Verfahren nach einem der vorangehenden Ansprüche,
**dadurch gekennzeichnet,**
**dass**, falls die Knickwinkelgeschwindigkeit größer ist als die maximale Schubwinkelgeschwindigkeit und eine momentane Fahrzeuggeschwindigkeit kleiner ist als eine vorgegebene Minimalgeschwindigkeit, das Kraftfahrzeug in den Stillstand gebremst wird und/oder ein Warnsignal an den Fahrer ausgegeben wird.

**6.** Verfahren nach einem der vorangehenden Ansprüche,
**dadurch gekennzeichnet,**
**dass** vor dem Erfassen des Lenkwinkels eine automatische Lenkwinkelanpassung durch ein Fahrerassistenzsystem durchgeführt wird, wobei der Lenkwinkel in Abhängigkeit eines benutzerseitig vorgegebenen Sollknickwinkels angepasst wird.

**7.** Verfahren nach einem der vorangehenden Ansprüche,
**dadurch gekennzeichnet,**
**dass** der Lenkwinkel wenigstens eines Hinterrades des Kraftfahrzeugs bestimmt wird, wonach die maximalen Schubwinkelgeschwindigkeit in Abhängigkeit dieses Lenkwinkels berechnet wird.

**8.** Kraftfahrzeug,
**dadurch gekennzeichnet,**
**dass** es zur Durchführung des Verfahrens nach einem der vorangehenden Ansprüche ausgebildet ist, wobei es eine Knickwinkelerfassungseinrichtung zur Erfassung der Knickwinkelgeschwindigkeit, eine Lenkwinkelerfassungseinrichtung (21) zur Erfassung eines Lenkwinkels (18) und/oder ein Fahrerassistenzsystem zur Vorgabe des Lenkwinkels (18) sowie eine Steuereinrichtung (26) zur Berechnung der maximalen Schubwinkelgeschwindigkeit und zur Steuerung des Kraftfahrzeugs (1, 19) zur Reduzierung der Fahrzeuggeschwindigkeit umfasst.

**9.** Kraftfahrzeug nach Anspruch 8,
**dadurch gekennzeichnet,**
**dass** es ein Fahrerassistenzsystem zur Steuerung eines Knickwinkels (14) zwischen dem Kraftfahrzeug (1, 19) und dem Anhänger (2) mit einem zugeordneten Bedienelement (22) zur Knickwinkelvorgabe durch einen Benutzer umfasst.

FIG. 1

```
        ┌──────────┐
   ┌───▶│          │──── S1
   │    └──────────┘
   │         │
   │         ▼
   │    ┌──────────┐
   │    │          │──── S2
   │    └──────────┘
   │         │
   │         ▼
   │    ┌──────────┐
   │    │          │──── S3
   │    └──────────┘
   │         │
   │         ▼
   │       ◇◇◇
   │      ◇    ◇──── S4
   │       ◇◇◇
   │    │    │
   │◀───┘    │
   │         ▼
   │    ┌──────────┐
   │    │          │──── S5
   │    └──────────┘
   │         │
   │         ▼
   │    ┌──────────┐
   │    │          │──── S6
   │    └──────────┘
   │         │
   │         ▼
   │    ┌──────────┐
   │    │          │──── S7
   │    └──────────┘
   │         │
   └─────────┘
```

FIG. 2

FIG. 3

S8

S9

S10

S11

S12

FIG. 4

19

20

22    21

23

7

24    25

26